# EUROPÄISCHE PATENTSCHRIFT

(11) **EP 4 256 698 B1**
(45) Veröffentlichungstag und Bekanntmachung des Hinweises auf die Patenterteilung: **14.05.2025**
(21) Anmeldenummer: 21830652.0
(22) Anmeldetag: 06.12.2021
(51) Int. Cl.: H02S 20/32

(54) **CARPORT**
CARPORT
ABRI POUR VOITURE

(30) Priorität: 07.12.2020 DE 102020132448
(43) Veröffentlichungstag der Anmeldung: 11.10.2023
(73) Patentinhaber: BURY Sp. z o.o., 39-300 Mielec (PL)
(72) Erfinder: BURY, Henryk, 32584 Löhne (DE)
(74) Vertreter: Gerstein, Hans Joachim
(86) Internationale Anmeldenummer: PCT/EP2021/084382
(87) Internationale Veröffentlichungsnummer: WO 2022/122648

(56) Entgegenhaltungen:
- DE-U1- 202014 007 891
- ES-A1- 2 368 544
- US-A1- 2013 118 099
- US-A1- 2013 234 645

## Beschreibung

Die Erfindung betrifft ein Verfahren zur Montage eines Carports für ein Kraftfahrzeug mit einem Unterbau und einem Oberbau, wobei der Unterbau eine Vielzahl von Stützelementen zur Befestigung an einer Bodenstruktur hat und die Stützelemente ein Aufnahmeraum für ein Kraftfahrzeug bilden, wobei der Unterbau eine Montagestruktur hat, die an den Stützelementen angeordnet ist, wobei der Oberbau an der Montagestruktur montierbar ist, wobei der Oberbau eine Grundstruktur zur Befestigung an der Montagestruktur und eine Trägerstruktur zur Befestigung von photovoltaischen Zellen hat.

Carports mit photovoltaischen Zellen zur Versorgung eines elektrischen Verbrauchers sind aus dem Stand der Technik bekannt. Derartige Carports können den Nachteil haben, dass diese nur aufwändig montiert werden können und gegebenenfalls sogar der Einsatz von schwerem Werkzeug nötig ist. Zudem muss der Unterbau bereits so ausgerichtet werden, dass die photovoltaische Zellenanordnung in einer optimalen Ausrichtung eine möglichst effiziente Stromerzeugung gewährleisten, da die Zellenanordnung in der Regel nur passgenau auf den Unterbau montiert werden kann.

Aus der ES 2368544 A1 ist ein zweiachsiger Solar-Tracker bekannt. Aus der US 2013/0118099 A1 ist eine rahmenartige Halterung mit zweiachsiger Nachführfunktion für Photovoltaikzellen bekannt. Aus der DE 20 2014 007 891 U1 ist die Solarmodul-Nachführung auf Carport- und Gebäudedächern bekannt. Aus der US 2013/0234645 A1 ist ein portables modulares Sonnen-Nachführsystem für Solarmodule bekannt.

Ausgehend hiervon ist es Aufgabe der vorliegenden Erfindung, ein verbessertes Verfahren zur Montage eines Carports zu schaffen, das eine Ausrichtung der Photovoltaikzellen auch unabhängig vor der Ausrichtung des Unterbaus ermöglicht.

Die Aufgabe wird mit einem Verfahren zur Montage eines Carports mit den Merkmalen des Anspruchs 1 gelöst. Vorteilhafte Ausführungsformen sind in den Unteransprüchen beschrieben.

Bei dem Carport wird vorgeschlagen, dass der Oberbau um zumindest eine Raumachse rotierbar gelagert ist.

Die Raumachse kann dabei vorzugsweise die Achse sein, die sich im Wesentlichen orthogonal von der Bodenstruktur, also in Längserstreckungsrichtung des Carports, erstreckt.

Der Oberbau kann zum Beispiel in einem Winkel von bis zu 360 Grad rotierbar gelagert sein. Es ist aber auch denkbar, dass der Oberbau um mehr als 360 Grad rotierbar um die Raumachse gelagert ist. Der Oberbau kann damit mehrmals um die Raumachse auf dem Unterbau rotiert werden.

Eine photovoltaische Zelle ist ein elektrisches Bauelement, das Strahlungsenergie in elektrische Energie umwandelt. Mehrere photovoltaische Zellen können zu einem Modul zusammengefasst werden, wobei mehrere Module eine Anordnung von photovoltaischen Zellen bilden.

Durch die rotierbare Lagerung des Oberbaus um die Raumachse, können die photovoltaischen Zellen derartig auf den Sonnenstand ausgerichtet werden, dass eine effiziente Stromerzeugung, bzw. eine effiziente Umwandlung der Sonnenenergie in elektrische Energie, der photovoltaischen Zellen gewährleistet werden kann.

Weiterhin kann die Montage des Carports durch den oben beschriebenen Aufbau erleichtert werden. Der Oberbau kann zunächst ohne spezielle Ausrichtung auf der Montagestruktur angebracht werden. Anschließend kann der Oberbau derart rotiert werden, dass die photovoltaischen Zellen dem Sonnenstand entsprechend ausgerichtet ist. Der Oberbau kann somit bereits vor einer entsprechenden Feinjustierung auf den Unterbau angebracht werden, wobei der Oberbau durch eine einfache Rotation um die Raumachse in eine optimale Position bewegt werden kann.

Anschließend ist wird der Oberbau mit der Montagestruktur fixiert, sodass eine versehentliche Änderung der Ausrichtung der photovoltaischen Zellen ohne Lösen der Fixierung nicht möglich ist. Eine Fixierung kann zum Beispiel über eine Art Schlauchschelle oder einen Schlauchschellenmechanismus erfolgen.

Die Trägerstruktur kann in Richtung der Raumachse verschiebbar zur Einstellung eines Neigungswinkels der photovoltaischen Zellen gelagert sein. Ferner vorteilhaft kann der Neigungswinkel kontinuierlich oder auf wenigstens zwei diskrete Positionen einstellbar sein.

Der Neigungswinkel ist dabei der Winkel zwischen einer Ebene die durch die photovoltaische Zelle aufgespannt wird und einer Ebene, die durch die Bodenstruktur aufgespannt wird. Für einen effizienten Betrieb der photovoltaischen Zellen ist es vorteilhaft, wenn die photovoltaischen Zellen in einem 90 Grad Winkel zur Sonneneinstrahlung ausgerichtet wird.

Der Neigungswinkel kann zwischen 0 Grad und 60 Grad, insbesondere zwischen 20 Grad und 40 Grad, je nach Standort des Carports einstellbar sein. Insbesondere kann der Neigungswinkel auf zwei diskrete Positionen einstellbar sein, sodass der Neigungswinkel in der Sommerzeit und in der Winterzeit auf die jeweilige diskrete Position einstellbar ist. Die diskrete Position ist dabei die Position, in der die Sonnenstrahlung während des Sonnenhöchststandes in einem 90 Grad Winkel auf die photovoltaische Zelle treffen. Die diskrete Position ändert sich in Abhängigkeit des Sonnenhöchststandes, sodass der Neigungswinkel zumindest auf zwei diskrete Positionen, zum Beispiel für den Sonnenhöchststand der Sommerzeit und für den Sonnenhöchststand der Winterzeit, einstellbar ist.

Insbesondere ist denkbar, dass der Neigungswinkel in Abhängigkeit des Kalenderdatums automatisch einstellbar sein. Der Neigungswinkel kann somit automatisch je nach aktuellem Datum nachgeführt werden, wobei ein effizienter Betrieb der photovoltaischen Zellen gewährleistet werden kann.

Auf diese Weise kann ein Carport mit photovoltaischen Zellen bereitgestellt werden, die sowohl durch die Rotation um die Raumachse als auch durch die Einstellung des Neigungswinkels an den Sonnenstand ausgerichtet werden kann.

Der Neigungswinkel kann zum Beispiel über ein Hub-Element einstellbar sein.

Der Oberbau kann um die Raumachse in einem Winkel von bis zu 90 Grad rotierbar sein.

Durch die Rotation können die photovoltaischen Zellen auf einfache Weise bei der Montage des Carports auf den Sonnenstand ausgerichtet werden. Dabei können die photovoltaischen Zellen während der Montage bereits grob auf den Sonnenstand eingestellt werden. Anschließend kann der Oberbau durch Rotation in einem Winkel bis zu 90 Grad um die Raumachse feinjustiert werden, sodass die photovoltaischen Zellen entsprechend auf den Sonnenstand ausgerichtet sind. Durch die Verkleinerung des Winkels, kann auch der Aufbau des Carports vereinfacht werden, sodass nur noch eine Rotation um bis zu 90 Grad notwendig ist.

Die Montagestruktur kann kreisförmig ausgebildet sein, wobei der Oberbau entlang der kreisförmigen Montagestruktur um die Raumachse rotierbar gelagert ist.

Durch den kreisförmigen Aufbau der Montagestruktur kann eine einfache Rotation des Oberbaus entlang der Montagestruktur um die Raumachse erreicht werden und gleichzeitig eine stabile Konstruktion gewährleistet werden.

Die kreisförmige Montagestruktur ist insbesondere ringförmig ausgebildet, wobei der gesamte Oberbau entlang einer Kreisbahn der ringförmigen Montagestruktur um die Raumachse rotierbar gelagert ist. Die Kreisbahn ist dabei als durchgehende Kreisbahn zu verstehen und insbesondere nicht als Vieleck, das einen Kreis beschreibt. Dies hat den Vorteil, dass der gesamte Oberbau um die Raumachse rotierbar ist, um eine vereinfachte Montage des Oberbaus auf dem Unterbau zu erreichen. Dabei ist denkbar, dass der Oberbau beliebig oft um 360° Grad um die Raumachse rotiert werden kann, bis die gewünschte Position auf dem Unterbau eingestellt ist.

Die kreisförmige Montagestruktur kann aus zumindest einem zylinderförmigen Element gebildet sein. Ferner vorteilhaft kann das zylinderförmige Element eine Ringstruktur bilden, wobei die Ringstruktur über wenigstens ein Verbindungselement mit den Stützelementen verbindbar ausgebildet ist.

Die Verbindungselemente können insbesondere als Lagerbuchse ausgebildet sein, wobei die Ringstruktur in den als Lagerbuchsen ausgebildeten Verbindungselementen gelagert ist. Durch die als Lagerbuchse ausgebildeten Verbindungselemente, können die Stützelemente vor der Befestigung mit der Bodenstruktur entlang der Ringstruktur der Montagestruktur verschoben werden, sodass die Stützelemente an dem Montageort positioniert und anschließend an der Bodenstruktur befestigt werden können.

Die Montagestruktur kann auch unabhängig vom Vorhandensein des Verbindungselementes als eine Ringstruktur ausgebildet sein.

Die Grundstruktur kann mit wenigstens einem weiteren Verbindungselement mit der Ringstruktur verbindbar ausgebildet sein.

Das weitere Verbindungselement kann dabei insbesondere der gleichen Art wie das Verbindungselement zwischen der Ringstruktur und den Stützelementen sein. Das weitere Verbindungselement kann somit insbesondere als Lagerbuchse ausgebildet sein, sodass der Oberbau auf einfache Weise um die Raumachse rotierbar ausgebildet ist, indem die Ringstruktur durch die Lagerbuchse geführt wird.

An dem Unterbau und/oder an dem Oberbau können Stabilisierungselemente zur Stabilisierung der Montagestruktur und/oder zur Stabilisierung der Trägerstruktur angeordnet sein. Ferner vorteilhaft können die Stabilisierungselemente an den Neigungswinkel anpassbar ausgebildet sein.

Die Trägerstruktur und/oder die Montagestruktur wird dabei durch die Stabilisierungselemente gestützt, sodass die Trägerstruktur und/oder die Montagestruktur gegen die Gewichtskraft der photovoltaischen Zelle, bzw. des gesamten Oberbaus, abgestützt wird. Dabei ist zum Beispiel denkbar, dass die Stabilisierungselemente von den Stützelementen abragen und mit der Montagestruktur verbunden sind, sodass die Gewichtskraft auch über die Stabilisierungselemente abgeleitet werden kann.

Die Grundstruktur kann viereckig ausgebildet sein. Dies hat den Vorteil, dass die photovoltaischen Zellen vereinfacht auf einem viereckigen Profil montiert werden können.

Die Grundstruktur kann an Auflagerpunkten auf der Montagestruktur aufgelagert sein, wobei die Grundstruktur über Räder an den Auflagerpunkten auf der Montagestruktur verschieblich gelagert ist.

Durch die Räder kann der Oberbau vereinfacht auf oder entlang der Montagestruktur des Unterbaus verschoben werden, sodass die Ausrichtung der photovoltaischen Zellen durch die Rotation des Oberbaus vereinfacht erfolgen kann.

Es ist auch denkbar, dass anstatt der Räder ein Gleitelement wie zum Beispiel ein Gleiter aus einem Kunststoff verwendet werden kann.

An dem Carport kann ein Ladeelement zum Laden eines elektrischen Energiespeichers angeordnet sein.

Der Oberbau kann ein Nachführsystem haben, wobei das Nachführsystem derart eingerichtet ist, die photovoltaische Zelle auf den Sonnenstand auszurichten.

Das Nachführsystem richtet die photovoltaische Zelle automatisch nach dem aktuellen Sonnenstand aus, sodass der Oberbau eine kontinuierliche Rotation erfährt und die Sonnenstrahlen in einem Winkel von ca. 90 Grad, also im Wesentlichen orthogonal, auf die photovoltaische Zelle treffen können. Auf diese Weise kann die photovoltaische Zelle effizient betrieben werden.

Es ist denkbar, dass durch das Nachführsystem die photovoltaischen Zellen rotierbar um die Raumachse und verschieblich in Richtung der Raumachse zur Einstellung des Neigungswinkels auf den Sonnenstand ausgerichtet werden kann.

Ferner betrifft die vorliegende Erfindung ein System gemäß dem Anspruch 13, mit einer Vielzahl von den oben beschriebenen Carports, wobei die photovoltaischen Zellen der Carports mit jeweils einem zwischengeschalteten MPPT Konverter auf der Gleichspannungsebene miteinander verbunden sind.

Die photovoltaische Zelle liefert an eine angeschlossene Last grundsätzlich Gleichstrom. So können mehrere elektrische Verbraucher parallel mit einem elektrischen Strom versorgt werden. Soll nur ein elektrischer Verbraucher versorgt werden, können die Ausgangsströme mehrerer photovoltaischer Zellen der Carports auf der Gleichspannungsebene entweder direkt oder über MPP-Tracker-DC/DC-Konverter zusammengeschaltet werden oder über Wechselrichter auf einer Wechselspannungsebene als Ein- oder Drei-Phasen-Strom.

Es ist denkbar, dass die photovoltaischen Zellen eines Carports eine photovoltaische Zellanordnung bilden, wobei die photovoltaischen Zellanordnungen der Carports auf der Gleichspannungsebene oder auf der Wechselspannungsebene miteinander verbunden sind.

Dabei ist denkbar, dass die Vielzahl von Carports an einem einzelnen zentralen Wechselrichter angeschlossen sind und durch den zentralen Wechselrichter die Ausgangsströme der photovoltaischen Zellen in einen Drei-Phasen-Strom umgewandelt werden.

So kann bei Bedarf ein einzelner elektrischer Stromspeicher durch die Energie mehrerer Carports schneller geladen werden als durch die Energie des einen. Es besteht aber weiterhin die Möglichkeit mehrere elektrische Verbraucher parallel mit Strom zu versorgen. Auf diese Weise kann der erfindungsgemäße Carport flexibler eingesetzt werden.

Die Verbindung mehrerer photovoltaischer Zellen der Carports auf einer Gleichspannungsebene hat den weiteren Vorteil, dass weniger verlustbehaftete Spannungswandlungen entstehen.

Die photovoltaischen Zellen der Carports des Systems können mit jeweils einem zwischengeschalteten MPPT Konverter auf der Gleichspannungsebene miteinander verbunden sein.

Durch den MPPT Konverter (Maximum Power Point Tracking) können den photovoltaischen Zellen die größte mögliche Leistung entnommen und dem System zugeführt werden. Bei photovoltaischen Zellen ist der optimale Betriebspunkt nicht konstant, da dieser in Abhängigkeit von zum Beispiel der Temperatur oder Bestrahlungsstärke schwankt. Durch einen nachgeschalteten MPPT Konverter können den photovoltaischen Zellen die jeweils größtmögliche Leistung entnommen und dem System zugeführt werden, sodass kein zusätzlicher Gleichspannungswandler notwendig ist, um die unterschiedlichen Spannungen auf ein gleiches Niveau anzupassen.

Ferner vorteilhaft kann ein Gleichspannungswandler zum Laden eines Fahrzeugs mit Elektroantrieb mit einem Gleichspannungszwischenkreis des Wechselrichters verbunden sein oder die Zwischenkreisspannung des Wechselrichters kann sich so einstellen, dass sie der Ladespannung für das Fahrzeug mit Elektroantrieb entspricht. Dadurch entfällt der zusätzliche Gleichspannungswandler, der ansonsten die Spannungsanpassung vornehmen würde, wobei sich die dadurch entstehenden Verluste verringern.

Durch den Zwischenkreis kann ein Fahrzeug mit Elektroantrieb zum Beispiel direkt an dem Zwischenkreis geladen werden. Dabei entspricht die Zwischenkreisspannung der Ladespannung des Fahrzeuges mit Elektroantrieb.

Es ist aber auch denkbar, dass mit dem Zwischenkreis ein Gleichspannungswandler gekoppelt ist, wobei der Gleichspannungswandler die Zwischenkreisspannung auf die Ladespannung des Fahrzeuges mit Elektroantrieb konvertiert.

Der Wechselrichter dient dazu, neben der elektrischen Energie, die für die Ladung des Fahrzeuges mit Elektroantrieb aufgewendet wird, überschüssige elektrische Energie in zum Beispiel das allgemeine Stromnetz einzuspeisen. Umgekehrt besteht aber auch die Möglichkeit, von dem allgemeinen Stromnetz elektrische Leistung zu beziehen, sollte die Leistung aus den photovoltaischen Zellen nicht zum Laden des Fahrzeuges mit Elektroantrieb ausreichen. Der Wechselrichter ist folglich dazu eingerichtet, Gleichspannung in Wechselspannung und umgekehrt zu konvertieren.

Es ist denkbar, dass das erfindungsgemäße System auch losgelöst, also unabhängig, von dem oben beschriebenen Carport besteht. Das oben beschriebene System funktioniert somit auch nur durch Kombination einer Vielzahl von photovoltaischen Zellen. Ein System ohne die direkte Anwendung eines oben beschriebenen Carports kann wie folgt beschrieben werden:
System mit einer Vielzahl von photovoltaischen Zellen, dadurch gekennzeichnet, dass die photovoltaischen Zellen auf einer Gleichspannungsebene oder über wenigstens einen zwischengeschalteten Wechselrichter auf einer Wechselspannungsebene miteinander verbunden sind. Die vorteilhaften Ausgestaltungen entsprechen dabei den oben beschrieben Ausführungen mit einem Carport.

Ferner vorteilhaft kann das System kann aus mehreren Anordnungen von photovoltaischen Zellen gebildet sein.

Der unbestimmte Begriff "ein" ist als solcher und nicht als Zahlwort zu verstehen. So ist auch denkbar, dass der Unterbau zum Beispiel eine Vielzahl von Montagestrukturen, insbesondere zwei oder vier Montagestrukturen, für den Oberbau hat. Entsprechend kann der Oberbau eine Vielzahl von Grundstrukturen, insbesondere zwei oder vier Grundstrukturen, für die Montage auf der Montagestruktur oder den Montagestrukturen aufweisen.

Die Erfindung wird nachfolgend anhand von Ausführungsbeispielen beispielhaft mit den beigefügten Zeichnungen näher erläutert. Es zeigen:
- Figur 1 -: einen Unterbau eines erfindungsgemäßen Carports in einer perspektivischen Ansicht;
- Figur 2 -: einen Oberbau eines erfindungsgemäßen Carports in einer perspektivischen Ansicht;
- Figur 3 -: ein erfindungsgemäßes Carport in einer perspektivischen Ansicht;
- Figur 4 -: ein Carport nach Figur 3 in einer Explosionsansicht.

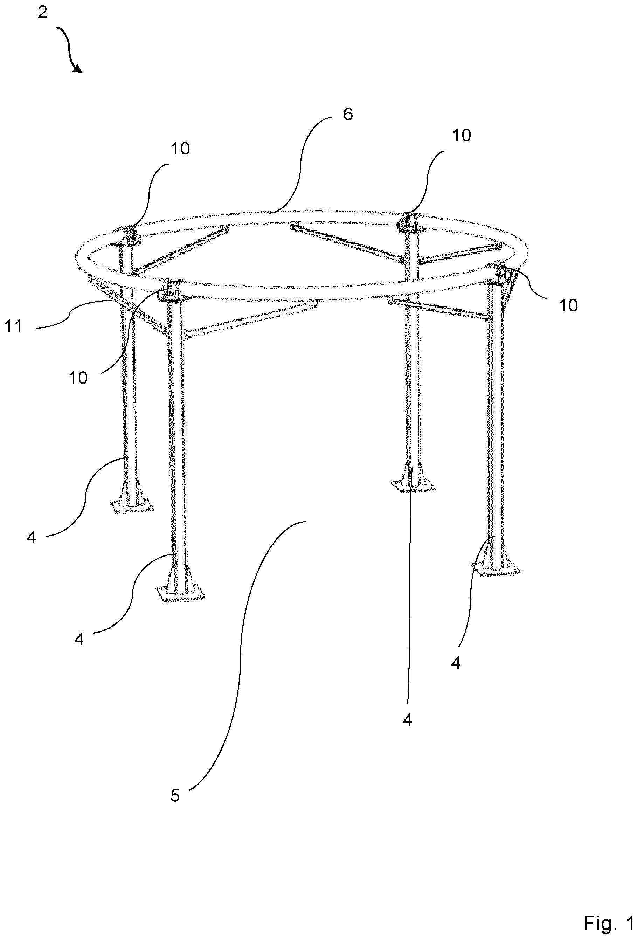

Figur 1 zeigt einen Unterbau 2 eines erfindungsgemäßen Carports in einer perspektivischen Ansicht. Der Unterbau 2 hat vier Stützelemente 4, wobei die Stützelemente 4 an einer Bodenstruktur durch zum Beispiel eine Schraubverbindung befestigt werden können. Die Stützelemente 4 bilden einen Aufnahmeraum 5, wobei der Aufnahmeraum 5 für ein Kraftfahrzeug wie zum Beispiel ein PKW dimensioniert ist.

An dem Unterbau 4 ist eine Montagestruktur 6 angeordnet, wobei jeweils ein Stützelement 4 über ein Verbindungselement 10 mit der Montagestruktur 6 verbunden ist. Deutlich wird, dass die Montagestruktur 6 kreisförmig ausgebildet ist. Die kreisförmige Montagestruktur 6 ist aus einem zylinderförmigen Element gebildet, indem das zylinderförmige Element eine Ringstruktur ausbildet.

Die Verbindungselemente 10 sind dabei als Lagerbuchse ausgebildet, wobei die Ringstruktur in den als Lagerbuchsen ausgebildeten Verbindungselementen 10 gelagert ist. Durch die als Lagerbuchse ausgebildeten Verbindungselemente 10 können die Stützelemente 4 vor der Befestigung mit der Bodenstruktur entlang der Ringstruktur der Montagestruktur 6 verschoben werden. Auf diese Weise können die Stützelemente 4 an dem Montageort positioniert und anschließend an der Bodenstruktur befestigt werden.

Weiterhin zu erkennen ist, dass die als Ringstruktur ausgebildete Montagestruktur 6 über Stabilisierungselemente 11 stabilisiert wird, so dass die Montagestruktur 6 gegen ein Durchbiegen gesichert wird. Dabei ragen jeweils zwei Stabilisierungselemente 11 von einem Stützelement 4 ab und sind an ihrem diametral gegenüberliegenden Ende mit der Montagestruktur 6 verbunden.

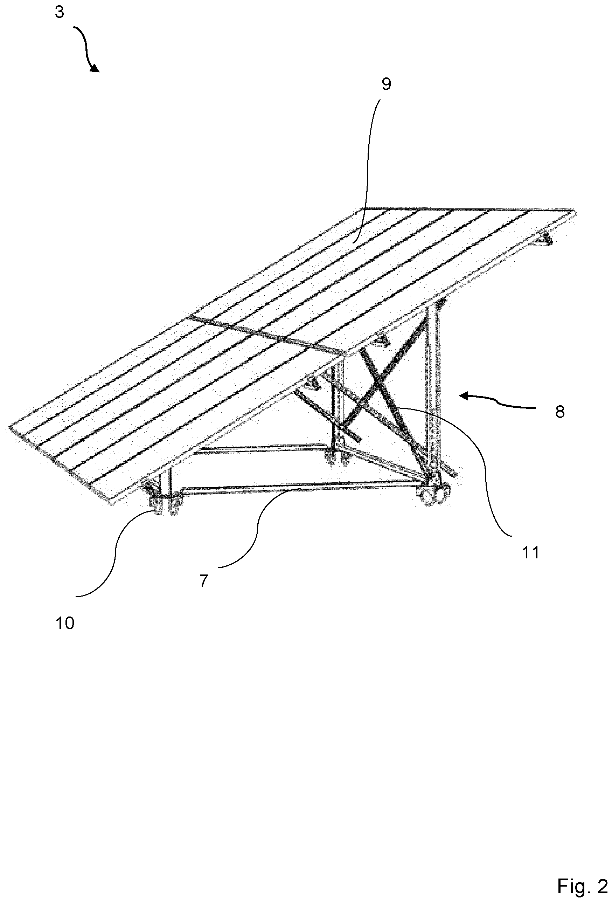

Figur 2 zeigt einen Oberbau 3 eines erfindungsgemäßen Carports in einer perspektivischen Ansicht. Der Oberbau 3 hat eine Grundstruktur 7, wobei die Grundstruktur 7 als rechteckiges Profil ausgebildet ist. Auf der Grundstruktur 7 ist eine Trägerstruktur 8 angeordnet, wobei die Trägerstruktur 8 zur Befestigung von photovoltaischen Zellen 9 eingerichtet ist. Die Trägerstruktur 8 wird dabei über Stabilisierungselemente 11 gestützt, sodass die Trägerstruktur 8 gegen die Gewichtskraft der photovoltaischen Zelle 9 abgestützt wird.

Weiterhin zu erkennen ist, dass an den Ecken der Grundstruktur 7 jeweils ein Verbindungselement 10 angeordnet ist, wobei das Verbindungselement 10 als Lagerbuchse, bzw. als Gleitlager, ausgebildet ist. Über das Verbindungselement 10 kann die Grundstruktur 7 zum Beispiel auf eine Montagestruktur 6 des Unterbaus 2 nach Figur 1 montiert werden.

Die photovoltaischen Zellen 9 sind in einem bestimmten Neigungswinkel auf der Trägerstruktur 8 befestigt. Der Neigungswinkel ist dabei der Winkel zwischen einer Ebene die durch die photovoltaischen Zellen 9 aufgespannt wird und einer Ebene, die durch die Bodenstruktur aufgespannt wird. Für einen effizienten Betrieb der photovoltaischen Zellen 9 ist es vorteilhaft, wenn die photovoltaischen Zellen 9 in einem 90 Grad Winkel zur Sonneneinstrahlung ausgerichtet wird. Dies entspricht einem Neigungswinkel in Deutschland zwischen 30 Grad und 75 Grad, eine hohe Gesamtperformance wird insbesondere zwischen 30 Grad und 40 Grad, je nach Standort des Carports, erzielt.

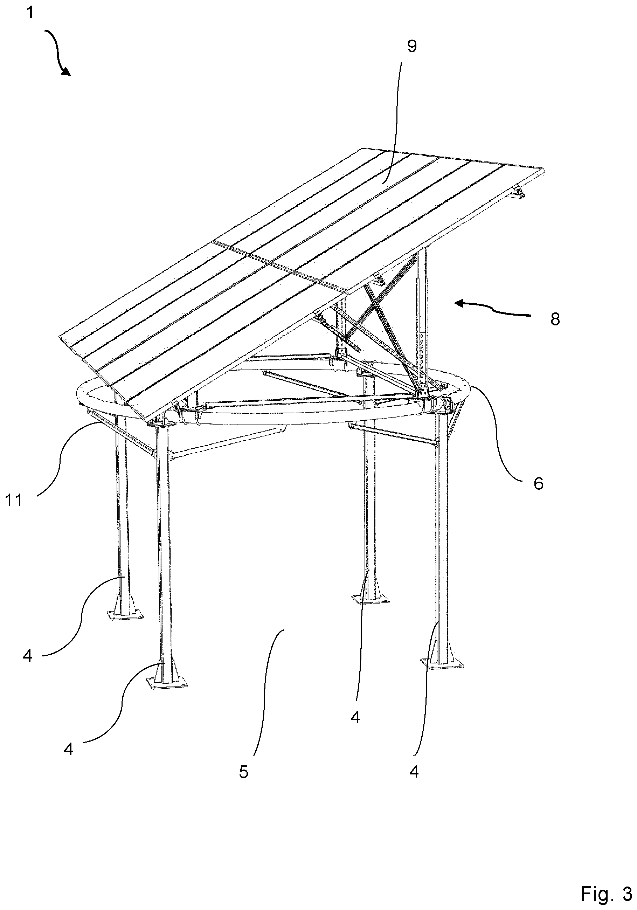

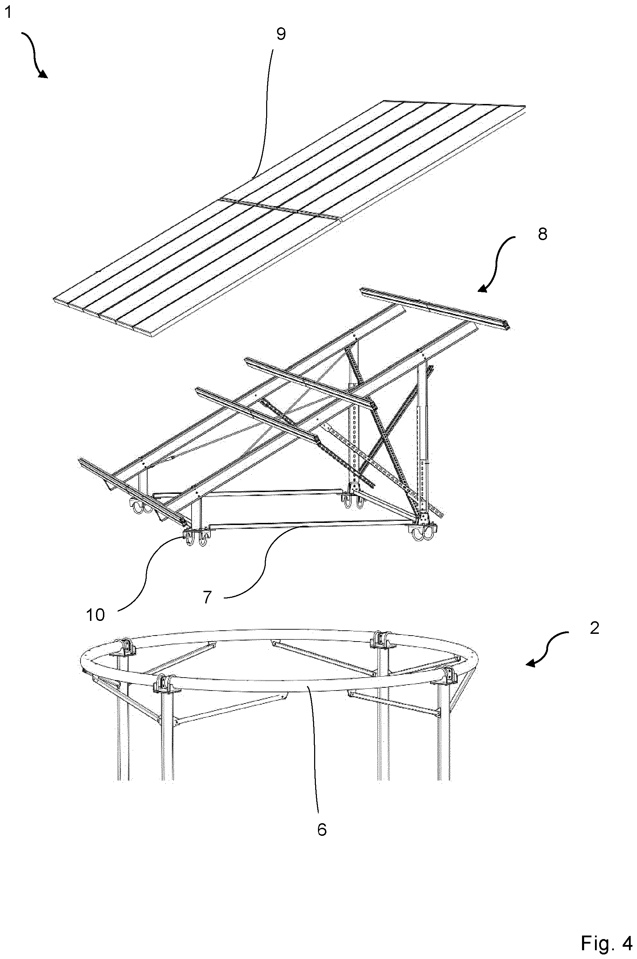

Figur 3 zeigt ein erfindungsgemäßes Carport 1 in einer perspektivischen Ansicht mit einem Unterbau 2 nach der Figur 1 und einem Oberbau 3 nach der Figur 2. Ergänzend zeigt Figur 4 das Carport 1 nach Figur 3 in einer Explosionsansicht.

Deutlich wird, dass der Oberbau 3 mit der Grundstruktur 7 auf der ringförmigen Montagestruktur 6 des Unterbaus 2 über Verbindungselemente 10 befestigt ist. Deutlich wird auch, dass der Oberbau 3 durch die als Lagerbuchsen, bzw. Gleitlager, ausgebildeten Verbindungselemente 10 entlang der kreisförmigen Montagestruktur 6 rotierbar gelagert ist. Der Oberbau 3 ist dabei um eine Raumachse entlang der kreisförmigen Montagestruktur 6 rotierbar gelagert, wobei die Raumachse der Erstreckungsrichtung des Carports 1, bzw. der Stützelemente 4 entspricht. Die Raumachse ragt also im Wesentlichen orthogonal von der Bodenstruktur ab.

Es ist denkbar, dass der Oberbau 3 um 360 Grad um die Raumachse rotierbar ist. Vorteilhaft ist aber auch eine Rotation um lediglich 90 Grad. Auf diese Weise kann der Oberbau 3 auf dem Unterbau 2 angeordnet werden, anschließend durch Rotation um die Raumachse auf eine optimale Sonneneinstrahlung ausgerichtet und an der Montagestruktur 6 fixiert werden. So kann die Montage des Carports 1 erleichtert werden, indem der Oberbau 3 bereits vor einer entsprechenden Feinjustierung auf den Unterbau 2 montiert werden kann und lediglich in eine optimale Position rotiert werden muss.

### Bezugszeichenliste

- 1: Carport
- 2: Unterbau
- 3: Oberbau
- 4: Stützelement
- 5: Aufnahmeraum
- 6: Montagestruktur
- 7: Grundstruktur
- 8: Trägerstruktur
- 9: Photovoltaische Zelle
- 10: Verbindungselement
- 11: Stabilisierungselement

## Patentansprüche

1. Verfahren zur Montage eines Carports (1) für ein Kraftfahrzeug,
- wobei der Carport (1) einen Unterbau (2) und einen Oberbau (3) hat,
- wobei der Unterbau (2) eine Vielzahl von Stützelementen (4) zur Befestigung an einer Bodenstruktur hat und die Stützelemente (4) ein Aufnahmeraum (5) für ein Kraftfahrzeug bilden,
- wobei der Unterbau (2) eine Montagestruktur (6) hat, die an den Stützelementen (4) angeordnet ist,
- wobei der Oberbau (3) an der Montagestruktur (6) montierbar ist,
- wobei der Oberbau (3) eine Grundstruktur (7) zur Befestigung an der Montagestruktur (6) und eine Trägerstruktur (8) zur Befestigung von photovoltaischen Zellen (9) hat,
- wobei der Oberbau (3) um zumindest eine Raumachse rotierbar gelagert ist,
- wobei an dem an dem Carport (1) ein Ladeelement zum Laden eines elektrischen Energiespeichers eines Fahrzeugs mit Elektroantrieb angeordnet ist,
mit folgenden Montageschritten:
a) der Oberbau (3) wird zunächst ohne spezielle Ausrichtung auf der Montagestruktur (6) angebracht,
b) anschließend wird der Oberbau (3) derart um die zumindest eine Raumachse auf dem Unterbau (2) rotiert, dass die photovoltaischen Zellen (9) dem Sonnenstand entsprechend ausgerichtet werden,
c) anschließend wird der Oberbau (3) mit der Montagestruktur (6) fixiert, sodass eine versehentliche Änderung der Ausrichtung der photovoltaischen Zellen (9) ohne Lösen der Fixierung nicht möglich ist.

2. Verfahren nach Anspruch 1, **dadurch gekennzeichnet, dass** die Trägerstruktur (8) in Richtung der Raumachse verschiebbar zur Einstellung eines Neigungswinkels der photovoltaischen Zellen (9) gelagert ist.

3. Verfahren nach Anspruch 2, **dadurch gekennzeichnet, dass** der Neigungswinkel auf wenigstens zwei diskreten Positionen einstellbar ist.

4. Verfahren nach einem der vorhergehenden Ansprüche, **dadurch gekennzeichnet, dass** der Oberbau (3) um die Raumachse in einem Winkel von bis zu 90 Grad rotierbar ist.

5. Verfahren nach einem der vorhergehenden Ansprüche, **dadurch gekennzeichnet, dass** die Montagestruktur (6) kreisförmig ausgebildet ist, wobei der Oberbau (3) entlang der kreisförmigen Montagestruktur (6) um die Raumachse rotierbar gelagert ist.

6. Verfahren nach Anspruch 5, **dadurch gekennzeichnet, dass** die kreisförmige Montagestruktur (6) aus zumindest einem zylinderförmigen Element gebildet ist.

7. Verfahren nach Anspruch 6, **dadurch gekennzeichnet, dass** das zylinderförmige Element eine Ringstruktur bildet, wobei die Ringstruktur über wenigstens ein Verbindungselement (10) mit den Stützelementen (4) verbindbar ausgebildet ist.

8. Verfahren nach einem der vorhergehenden Ansprüche, **dadurch gekennzeichnet, dass** die Grundstruktur (7) mit wenigstens einem weiteren Verbindungselement (10) mit der Ringstruktur verbindbar ausgebildet ist.

9. Verfahren nach einem der vorhergehenden Ansprüche, **dadurch gekennzeichnet, dass** an dem Unterbau (2) und/oder an dem Oberbau (3) Stabilisierungselemente (11) zur Stabilisierung der Montagestruktur (6) und/oder zur Stabilisierung der Trägerstruktur (8) angeordnet sind.

10. Verfahren nach Anspruch 9, **dadurch gekennzeichnet, dass** die Stabilisierungselemente (11) an den Neigungswinkel anpassbar ausgebildet sind.

11. Verfahren nach einem der vorhergehenden Ansprüche, **dadurch gekennzeichnet, dass** die Grundstruktur (7) viereckig ausgebildet ist.

12. Verfahren nach einem der vorhergehenden Ansprüche, **dadurch gekennzeichnet, dass** die Grundstruktur (7) an Auflagerpunkten auf der Montagestruktur (6) aufgelagert ist, wobei die Grundstruktur (7) über Räder an den Auflagerpunkten auf der Montagestruktur (7) verschieblich ist.

13. System mit einer Vielzahl von Carports (1) für ein Kraftfahrzeug,
- wobei der Carport (1) jeweils einen Unterbau (2) und einen Oberbau (3) hat,
- wobei der Unterbau (2) eine Vielzahl von Stützelementen (4) zur Befestigung an einer Bodenstruktur hat und die Stützelemente (4) ein Aufnahmeraum (5) für ein Kraftfahrzeug bilden,
- wobei der Unterbau (2) eine Montagestruktur (6) hat, die an den Stützelementen (4) angeordnet ist,
- wobei der Oberbau (3) an der Montagestruktur (6) montierbar ist,
- wobei der Oberbau (3) eine Grundstruktur (7) zur Befestigung an der Montagestruktur (6) und eine Trägerstruktur (8) zur Befestigung von photovoltaischen Zellen (9) hat,
- wobei der Oberbau (3) um zumindest eine Raumachse rotierbar gelagert ist,
**dadurch gekennzeichnet, dass** die photovoltaischen Zellen (9) der Carports (1) mit jeweils einem zwischengeschalteten MPPT Konverter auf der Gleichspannungsebene miteinander verbunden sind.

14. System nach Anspruch 13, **dadurch gekennzeichnet, dass** ein Gleichspannungswandler für ein Fahrzeug mit Elektroantrieb mit dem Zwischenkreis verbunden ist oder dass die Zwischenkreisspannung einer benötigten Ladespannung für das Fahrzeug mit Elektroantrieb entspricht.

## Claims

1. Method for mounting a carport (1) for a motor vehicle,
- whereby the carport (1) has a substructure (2) and a superstructure (3), wherein the substructure (2) has a plurality of support elements (4) for attachment to a floor structure and the support elements (4) form a receiving space (5) for a motor vehicle,
- wherein the substructure (2) has a mounting structure (6) which is arranged on the support elements (4),
- the superstructure (3) being mountable on the mounting structure (6),
- wherein the superstructure (3) has a base structure (7) for attachment to the mounting structure (6) and a support structure (8) for attachment of photovoltaic cells (9)
- wherein the superstructure (3) is mounted so as to be rotatable about at least one spatial axis,
- wherein a charging element for charging an electrical energy storage device of a vehicle with electric drive is arranged on the carport (1),
with the following assembly steps:
a) the superstructure (3) is initially attached to the mounting structure (6) without special alignment,
b) the superstructure (3) is then rotated around at least one spatial axis on the substructure (2) in such a way that the photovoltaic cells (9) are aligned according to the position of the sun,
c) the superstructure (3) is then fixed to the mounting structure (6) so that it is not possible to accidentally change the alignment of the photovoltaic cells (9) without loosening the fixing.

2. Method according to claim 1, **characterized in that** the support structure (8) is mounted so as to be displaceable in the direction of the spatial axis in order to adjust an angle of inclination of the photovoltaic cells (9).

3. Method according to claim 2, **characterized in that** the angle of inclination is adjustable to at least two discrete positions.

4. Method according to one of the preceding claims, **characterized in that** the superstructure (3) can be rotated about the spatial axis at an angle of up to 90 degrees.

5. Method according to one of the preceding claims, **characterized in that** the mounting structure (6) is circular, the superstructure (3) being mounted so as to be rotatable about the spatial axis along the circular mounting structure (6).

6. Method according to claim 5, **characterized in that** the circular mounting structure (6) is formed from at least one cylindrical element.

7. Method according to claim 6, **characterized in that** the cylindrical element forms a ring structure, wherein the ring structure is designed to be connectable to the support elements (4) via at least one connecting element (10).

8. Method according to one of the preceding claims, **characterized in that** the base structure (7) is designed to be connectable to the ring structure by means of at least one further connecting element (10).

9. Method according to one of the preceding claims, **characterized in that** stabilizing elements (11) for stabilizing the mounting structure (6) and/or for stabilizing the support structure (8) are arranged on the substructure (2) and/or on the superstructure (3).

10. Method according to claim 9, **characterized in that** the stabilizing elements (11) are designed to be adaptable to the angle of inclination.

11. Method according to one of the preceding claims, **characterized in that** the base structure (7) is quadrangular.

12. Method according to one of the preceding claims, **characterized in that** the base structure (7) is supported at support points on the mounting structure (6), the base structure (7) being displaceable on the mounting structure (7) via wheels at the support points.

13. System with a plurality of carports (1) for a motor vehicle,
- whereby the carport (1) has a substructure (2) and a superstructure (3),
- wherein the substructure (2) has a plurality of support elements (4) for attachment to a floor structure and the support elements (4) form a receiving space (5) for a motor vehicle,
- wherein the substructure (2) has a mounting structure (6) which is arranged on the support elements (4),
- the superstructure (3) being mountable on the mounting structure (6),
- wherein the superstructure (3) has a base structure (7) for attachment to the mounting structure (6) and a support structure (8) for attachment of photovoltaic cells (9),
- wherein the superstructure (3) is mounted so as to be rotatable about at least one spatial axis,
**characterized in that** the photovoltaic cells (9) of the carports (1) are each connected to one another with an intermediate MPPT converter at the DC voltage level .

14. System according to claim 13, **characterized in that** a DC/DC converter for a vehicle with electric drive is connected to the DC link or that the DC link voltage corresponds to a required charging voltage for the vehicle with electric drive.

## Revendications

1. Procédé de montage d'un abri de voiture (1) pour un véhicule automobile, sachant que
- l'abri de voiture (1) possède une sous-structure (2) et une superstructure (3),
- la sous-structure (2) comporte une pluralité d'éléments de support (4) destinés à être fixés à une structure de sol, et les éléments de support (4) forment un espace d'accueil (5) pour un véhicule automobile,
- la sous-structure (2) possède une structure de montage (6) qui est disposée sur les éléments de support (4),
- la superstructure (3) peut être montée sur la structure de montage (6),
- la superstructure (3) possède une structure de base (7), destinée à être fixée à la structure de montage (6), et une structure porteuse (8) destinée à fixer des cellules photovoltaïques (9),
- la superstructure (3) est montée de manière à pouvoir tourner autour d'au moins un axe spatial,
- un élément de charge pour charger un accumulateur d'énergie électrique d'un véhicule à propulsion électrique est disposé au niveau de l'abri de voiture (1),
comprenant les étapes de montage suivantes :
a) d'abord, on monte la superstructure (3) sur la structure de montage (6) sans orientation particulière,
b) ensuite, on fait tourner la superstructure (3) autour dudit au moins un axe spatial sur la sous-structure (2) de manière à orienter les cellules photovoltaïques (9) en fonction de la position du soleil,
c) ensuite, on fixe la superstructure (3) à la structure de montage, de sorte qu'il n'est pas possible de modifier par inadvertance l'orientation des cellules photovoltaïques (9) sans défaire la fixation.

2. Procédé selon la revendication 1,
**caractérisé en ce que** la structure porteuse (8) est montée de manière à pouvoir être déplacée dans la direction de l'axe spatial pour régler un angle d'inclinaison des cellules photovoltaïques (9).

3. Procédé selon la revendication 2,
**caractérisé en ce que** l'angle d'inclinaison est réglable vers au moins deux positions discrètes.

4. Procédé selon l'une des revendications précédentes,
**caractérisé en ce que** la superstructure (3) peut tourner autour de l'axe spatial selon un angle allant jusqu'à 90 degrés.

5. Procédé selon l'une des revendications précédentes,
**caractérisé en ce que** la structure de montage (6) est réalisée en forme circulaire, la superstructure (3) étant montée de manière à pouvoir tourner autour de l'axe spatial le long de la structure de montage circulaire (6).

6. Procédé selon la revendication 5,
**caractérisé en ce que** la structure de montage circulaire (6) est formée d'au moins un élément cylindrique.

7. Procédé selon la revendication 6,
**caractérisé en ce que** l'élément cylindrique forme une structure annulaire, la structure annulaire étant conçue pour être reliée aux éléments de support (4) par l'intermédiaire d'au moins un élément de liaison (10).

8. Procédé selon l'une des revendications précédentes,
**caractérisé en ce que** la structure de base (7) est conçue pour pouvoir être reliée à la structure annulaire par l'intermédiaire d'au moins un autre élément de liaison (10).

9. Procédé selon l'une des revendications précédentes,
**caractérisé en ce que** des éléments de stabilisation (11) destinés à stabiliser la structure de montage (6) et/ou à stabiliser la structure porteuse (8) sont disposés sur la sous-structure (2) et/ou sur la superstructure (3).

10. Procédé selon la revendication 9,
**caractérisé en ce que** les éléments de stabilisation (11) sont conçus de manière à pouvoir être adaptés à l'angle d'inclinaison.

11. Procédé selon l'une des revendications précédentes,
**caractérisé en ce que** la structure de base (7) est de forme quadrangulaire.

12. Procédé selon l'une des revendications précédentes,
**caractérisé en ce que** la structure de base (7) est montée sur la structure de montage (6) en des points d'appui, la structure de base (7) pouvant être déplacée sur la structure de montage (7) par l'intermédiaire de roues situées aux points d'appui.

13. Système comprenant une pluralité d'abris de voiture (1) pour un véhicule automobile, sachant que
- chacun des abris de voiture (1) possède une sous-structure (2) et une superstructure (3),
- la sous-structure (2) comporte une pluralité d'éléments de support (4) destinés à être fixés à une structure de sol, et les éléments de support (4) forment un espace d'accueil (5) pour un véhicule automobile,
- la sous-structure (2) possède une structure de montage (6) qui est disposée sur les éléments de support (4),
- la superstructure (3) peut être montée sur la structure de montage (6),
- la superstructure (3) possède une structure de base (7), destinée à être fixée à la structure de montage (6), et une structure porteuse (8) destinée à fixer des cellules photovoltaïques (9),
- la superstructure (3) est montée de manière à pouvoir tourner autour d'au moins un axe spatial,
**caractérisé en ce que** les cellules photovoltaïques (9) des abris de voiture (1) sont reliées entre elles en termes de tension continue par un convertisseur MPPT intercalé.

14. Système selon la revendication 13,
**caractérisé en ce qu'**un convertisseur de tension continue pour un véhicule à propulsion électrique est relié au circuit intermédiaire ou **en ce que** la tension du circuit intermédiaire correspond à une tension de charge nécessaire pour le véhicule à propulsion électrique.
